# EUROPEAN PATENT APPLICATION

(11) **EP 0 707 889 A1**
(43) Date of publication of application: **24.04.1996**
(21) Application number: 95307481.2
(22) Date of filing: 20.10.1995
(51) Int. Cl.: B01J 35/06, B01D 53/94

(54) **Catalyst body and method of manufacturing the catalyst body**

(30) Priority: 20.10.1994 JP 255366/94
(71) Applicant: MATSUSHITA ELECTRIC INDUSTRIAL CO., LTD., Kadoma-shi, Osaka-fu 571 (JP)
(72) Inventor: Numoto, Hironao, Ikoma City, 630-01 (JP); Terashima, Tetsuo, Neyagawa City (JP); Miyaji, Toshiaki, Osaka City, 594 (JP)
(74) Representative: Price, Paul Anthony King

(57) **Abstract**

A catalyst body (3) is formed with a wave-shape and comprises a paper (1) mainly made of inorganic fiber adhered to a meshed core (2) of aluminum-containing ferrite stainless steel. The paper (1) and the meshed core (2) are combined or fixed by aggregation of a catalytic component comprising mainly inorganic powder and a noble metal component. The paper and the meshed core are pressed together to form the wave-shape and then cut to obtain a wave-shaped base. The base is dipped in a slurry containing the noble metal component and mainly composed of inorganic powder, and is then dried and heat-treated.

## Description

The present invention relates to a combustion catalyst body for catalyzed-combustion of a liquid fuel such as kerosene etc. or gaseous fuel such as town gas, natural gas etc., or a conversion catalyst for purifying exhaust gas discharged from various combustion apparatuses, automobiles, or the like, and a method of manufacturing the catalyst body.

In general, a wave-shaped catalyst body is obtained by molding a metal base into a desired shape having a wave-shape section and forming a catalyst coating on the surface of the metal base by dipping the metal base in a slurry in which catalyst component or material is dispersed.

As another method, it is well known to make a paper mainly-made of inorganic fiber in a desired shape (e.g., wave-shape), followed by sintering the shaped paper to improve its mechanical strength and then dipping it in a slurry in which catalyst component is dispersed so as to carry catalyst metal.

The catalyst bodies obtained by such methods have the below-mentioned problems.

The one obtained by forming the catalyst coating on a metal base can not be made thinner than a certain extent because of limitation due to mechanical and thermal strength or accuracy of the rolling and work process. Therefore, the conventional catalyst body had an adversely large heat capacity beyond a desired value.

On the other hand, a wave-shaped catalyst body which is made by sintering inorganic paper becomes weak in mechanical strength if its heat capacity is made small. Therefore, it is difficult to obtain a catalyst body which can endure in practical use.

An aim of the present invention is to provide a catalyst body which has a small heat capacity, and furthermore has an enough flexibility and mechanical strength to endure in practical use.

The present invention provides a catalyst body comprising:
a meshed core of aluminum-containing ferrite stainless steel,
a paper substantially consisting of inorganic fiber adhered to said meshed core, and a catalytic component comprising mainly a noble metal and inorganic powder;
wherein said catalytic component combines and fixes said paper and said meshed core with each other.

The word "meshed" means having many holes or many apertures. The word "meshed core" means a meshed plate or sheet or thin body such as an expanded metal sheet, or a punched plate obtained by punching a stainless steel plate, or a net or a mesh obtained by knitting stainless steel wires, having such holes or apertures and bar-shaped members or bones surrounding each hole or aperture.

The inorganic powder may consist of at least one compound selected from the group consisting of alumina, zirconia, zeolite, silica and titania.

As mentioned above, the catalyst body of the present invention comprises a composite of at least one paper mainly consisting of inorganic fiber and at least one meshed metal core as a base. Therefore, the heat capacity of the catalyst body is relatively small and the build up property is excellent. If a big thermal strain happens in use, the catalyst body relaxes the stress by itself and there is substantially no irreversible distortion.

The meshed core makes it possible to protect against distortion by an impulse in practical use. Even in such a rare possibility that a crack is made on the paper caused by a big stress, it does not cause a fatal or the whole destruction, and the crack is limited to low level. This is attained by function of the meshed core to maintain the form.

A method for manufacturing the catalyst body of the present invention is mentioned below.

In the method, a paper mainly made of inorganic fiber (hereinafter referred to as "paper") is fixed by pressing the fiber onto at least one meshed core made of aluminum-containing ferrite stainless steel, thereby to form a combined pile, and at the same time the thus combined pile is formed in a wave-shape by pressing. The paper contains some amount of organic component as a binder and for adding flexibility in the whole paper. During the pressing for forming into a desired shape (e.g., wave-shape), fibers of the paper are entangled with the bar-shaped metal members or the metal bones of the meshed core so that the bar-shaped metal members or the metal bones are caught into the paper in thickness direction of the paper. Then the paper and the meshed core(s) are tightly united. For actual way of pressing to form into wave-shape, the paper and the meshed core(s) are piled and passed between a pair of plastic pressing gears with sinusoidal shape teeth, set to give a predetermined pressing gap between them. The gap is preferred to be less than the original thickness of the paper. By selecting the interval so, the bar-shaped metal members or the metal bones of the meshed core are pressed into and entangled with the paper during the pressing step. After passing out the gears, the paper expands and restores almost to the thickness before pressing. At this time, the bar-shaped metal members or the metal bones of the meshed core maintain the state of interlocking with and in the paper. If the gap between the two gears is too small, the paper is broken. Therefore, the gap between the gears must be set in a selected range.

Then, the sheet combined in these ways is cut into a predetermined length to obtain a base composed of the paper and the meshed core(s).

Next, the base is dipped in a catalyst slurry in which a noble metal salt is dissolved and a catalyst carrier of inorganic powder, preferably active alumina powder,is dispersed. Alternatively, the base is dipped in a catalyst carrier slurry in which a catalyst carrier of inorganic powder, preferably active alumina powder, is dispersed. After picking up and drying the base, the inorganic powder is stuck and combined mainly in gaps among the inorganic fibers of the paper. And by aggregation of the inorganic powder at drying, the paper gains a sufficient mechanical strength. By a subsequent heat-treatment, the organic component in the paper is decomposed and removed, but sintering of the inorganic component progress; and the mechanical strength of the base is improved. Because the inorganic powder aggregates in the state where the bar-shaped metal members or the metal bones of the meshed core are buried in the paper, the meshed core is fixed firmly in the paper and acts as a reinforcing member of the catalyst body.

Another method may be such that the paper and the meshed core(s) are united integrally, cut into a predetermined length to obtain a base, then the base is heat-treated to decompose and remove the organic component in the paper, followed by dipping in the catalyst slurry or the catalyst carrier slurry. The paper wherefrom the organic component has been removed becomes mechanically fragile. Therefore it is preferable to treat the base carefully during the process of dipping it in the catalyst slurry or the catalyst carrier slurry. After picking up and drying the base, the inorganic powder in the slurry is fixed and adhered mainly in the gaps among the inorganic fibers entangled in the paper. Therefore, the paper gains an enough mechanical strength by drying and aggregation of the inorganic powder. By a further heat-treatment, sintering of inorganic component progresses and the mechanical strength of the paper is improved. The process of dipping in the catalyst slurry or the catalyst carrier slurry after decomposing of the organic component requires far more care in handling the base, in comparison with the method without decomposing of the organic component. But, the catalyst carrier becomes to be easily dispersed in thickness direction of the paper, and this causes uniformity of the catalyst component distribution. Therefore, the catalyst body of high reliability is obtained.

A noble metal catalyst is carried onto the base as follows. The one way of carrying the noble metal catalyst is dipping the base in the catalyst slurry in which a noble metal salt is dissolved and a catalyst carrier of inorganic powder is dispersed. Then, the noble metal salt stuck on the base is decomposed to noble metal by heat treatment. Another way of carrying noble metal catalyst is dipping the base in the catalyst carrier slurry in which a catalyst carrier of inorganic powder is dispersed. After drying the base, the base is dipped in an aqueous solution of a noble metal salt. And then, the noble metal salt stuck on the base is decomposed to noble metal by heat treatment.

In addition, the meshed metal core is oxidized to form a layer of alumina particles on the surface, simultaneous with the decomposition of the organic component in the paper during the heat-treatment. Therefore, weather resistance and corrosion durability of the meshed metal core are improved. It is possible to use a previously heat-treated meshed metal core having an oxide layer on the surface.

The meshed core may be combined or adhered to one face or both faces of the paper. As the meshed core, one having the porosity of 60 % or more, more preferably 70 % or more,is used, and it is intentionally entangled in the paper to some extent. The meshed core is strongly fixed with the paper, so that the catalyst carrier is mainly bound at the vicinity of the part where the meshed core is entangling.

By using the present invention, it is possible to obtain a catalyst body having small heat capacity, enough mechanical flexibility and mechanical strength to endure reliably in practical use. In addition, it is possible to manufacture the catalyst body with outstanding productivity.

Non-limiting examples of the present invention will now be described with reference to the accompanying drawings, in which:-

FIG. 1 is a perspective view of the catalyst body of the Example of the present invention.

FIG. 2 is a magnified vertical cross-sectional view of the catalyst of FIG. 1.

FIG.3 is a vertical sectional view of a steam generator used for estimation of a catalyst body.

FIG.4 is a vertical cross-sectional view taken on the sectional plane IV-IV' of FIG.3.

### Example 1

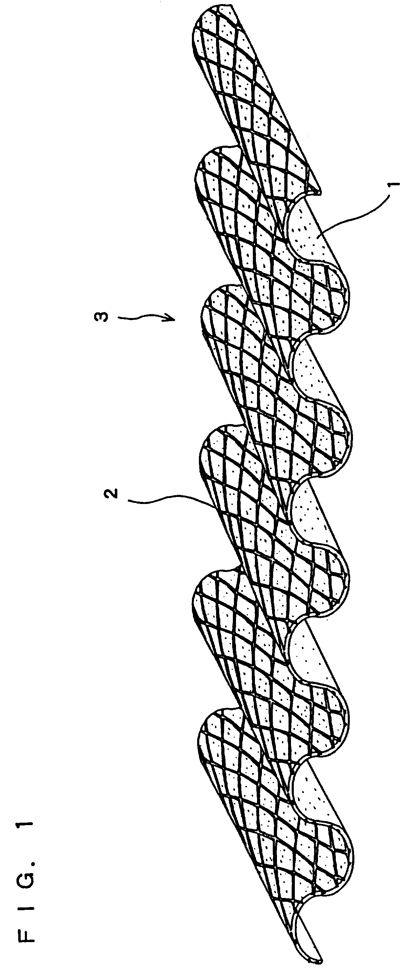

A paper made mainly of inorganic fiber and a meshed core of aluminum-containing ferrite stainless steel were piled or laminated each other and pressed together by passing through a pair of pressing gears having sinusoidal plastic teeth for uniting and forming into a wave-shape as shown in FIG.1.

The paper contains organic component of a predetermined amount as a binder so as to improve the flexibility.

As the meshed core, a sheet of ferrite stainless steel (30 mm width and 50 µm thickness) containing 20 wt% of chromium and 5 wt% of aluminum was treated into an expanded metal sheet which has substantially rhombic or hexagonal apertures with each side of about 1 mm length and has bone parts of about 0.2 mm width, and the expanded metal sheet was cut into 50 mm length pieces to obtain meshed cores.

On the other hand, a paper containing 96 wt% of alumina-silica fiber was prepared to have 0.3 mm thickness, 30 mm width and 50 mm length. The meshed core of the expanded metal sheet and the above-mentioned paper were piled and passed through a pair of pressing gears each with plastic sinusoidal shape teeth set to have a 0.25 mm gap between their teeth, so as to form wave-shape. Then, the meshed core was pressed into the paper thereby to entangle with the fiber of the paper, and both members are united in one body. Accordingly, a wave-shaped base of 3 mm height of ridge and 5 mm pitch was obtained.

Next, a catalyst slurry was obtained by mixing 100 g of BaO-Al₂O₃-CeO₂ powder (having a specific surface area of 120 m/g), 200 g of water, 50 g of isopropylalcohol and dinitrodiamineplatinum aqueous solution in an amount of 3 g converted to Pt in a ball mill. The above-mentioned base was dipped in the slurry, picked up and dried. Then, the slurry-coated base was heat-treated at 500°C for 5 minutes to decompose dinitrodiamineplatinum to platinum. As a result, there was produced a catalyst body wherein the meshed core of stainless steel had been fixed on the paper by aggregation of the catalyst carrier powder (BaO-Al₂O₃-CeO₂). This catalyst body carried 60 mg of Bao-Al₂O₃-CeO₂ and 1.8 mg of platinum, respectively.

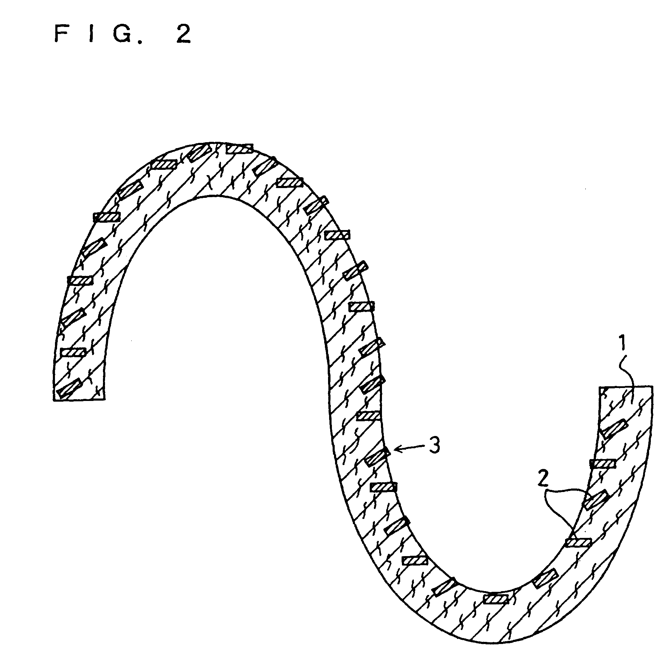

FIG.1 shows the view of the catalyst body 3 thus obtained. FIG.2 is a magnified schematic drawing of vertical cross-sectional view showing the catalyst body 3. In FIG.1 and FIG.2, numeral 1 indicates the inorganic paper and 2 indicates meshed metal core buried on the one side of the paper 1.

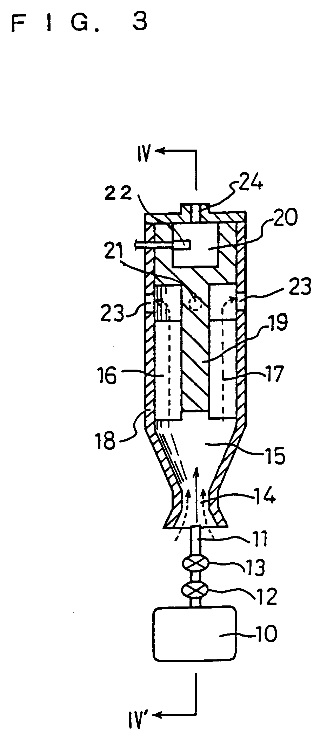

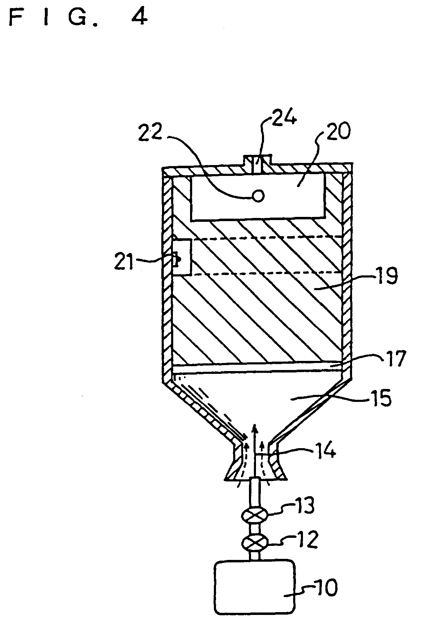

FIG.3 and FIG.4 are cross sectional views showing a steam generator wherein the above-mentioned catalyst body thus obtained was installed. A gas cylinder 10 of isobutane has a nozzle 11. A main valve 12 and an auxiliary valve 13 which is opened and closed by bimetal (not shown) are arranged between the cylinder 10 and the nozzle 11.

A gaseous fuel sprayed from the nozzle 11 draws or sucks surrounding air by an inducing effect of gas flow. The fuel is mixed with the air in a mixing chamber 14, and supplied into a combustion chamber 15. Two catalyst bodies 16 and 17 in accordance with the present example are disposed between a casing 18 and an aluminum-made heat exchanger 19 in the combustion chamber 15.

Reaction heats (combustion heats) generated in the catalyst bodies 16 and 17 are transferred to a steam generating chamber 20 through the heat exchanger 19. A piezoelectric ignition element 21 is arranged at a downstream position of the catalyst bodies. A nozzle 22 for providing drops of water to the bottom of the steam generating chamber 20 is arranged at upper side of the steam generating chamber 20. Additionally, water is supplied to the nozzle 22 from a pump (not shown).

The operation of the steam generator is described below.

At first, the main valve 12 is opened, and then the gaseous fuel is supplied from the nozzle 11 into the mixing chamber 14, and the air is supplied by induction at the same time. After the gaseous fuel mixed with air is introduced into the combustion chamber 15, a spark is generated by the piezoelectric ignition element 21, which then generates a flame temporarily at the position which is after the catalyst bodies 16 and 17, and around the position which is before an exhaust port 23. Then, by the reaction heat of the flame, the part at the downstream of the catalyst bodies 16 and 17 is heated and starts catalyzed combustion. And the catalyzed combustion transfers to the uppermost portions of the catalyst bodies 16 and 17. The combustion exhaust gas is discharged through the exhaust port 23.

The reaction heat (combustion heat) is transferred towards the steam generating chamber 20 through the heat exchanger 19. It becomes possible to supply drops of water from the time when the bottom of the steam generating chamber 20 reaches to the enough temperature (approximately 200°C) by a pump from a nozzle 22. Then it becomes possible to start supply of steam from the steam port 24. A bimetal temperature sensor (not shown) associated to the auxiliary valve 13 senses temperature at one point of the side wall of the steam generating chamber 20, and closes the auxiliary valve 13 at a predetermined temperature (approximately 220°C), thereby stopping the supply of the fuel. Thus, the auxiliary valve 13 serves to control temperature of the heat exchanger 19. That is, in the present steam generator, supply and ceasing of the fuel is repeated. As a result, the catalyst body is subjected to repetition of heating and cooling.

Assessment of the obtained catalyst body in the above-mentioned manner was made with respect to the build up property and the life time. As the build up property, the time period until the bottom portion of the steam generating chamber 20 reaches 200°C was measured by using isobutane as fuel and setting excess air ratio to 1.0 and rate of combustion to 200 kcal/h. Similarly, the life time test was conducted under the condition of the excess air ratio of 1.0, and the rate of combustion to 200 kcal/h for 500 hours in continuous combustion to generate steam.

### Example 2

The same stainless steel as that in Example 1 (30 mm width and 50 µm thickness) was treated into an expanded metal sheet which has substantially rhombic or hexagonal apertures with each side of about 1 mm length and has bone parts of about 0.2 mm width, and the expanded metal sheet was cut into 50 mm length pieces to obtain meshed cores. The meshed core and a paper (0.3 mm thickness, 30 mm width and 50 mm length) containing 96 wt% of alumina-silica fiber were piled and passed through a pair of pressing gears each with plastic sinusoidal shape teeth set to have a 0.25 mm gap between their teeth so as to form wave-shape. Then, a wave-shaped base of 3 mm height of ridge and 5 mm pitch was obtained.

On the other hand, a catalyst carrier slurry was obtained by mixing 100 g of BaO-Al₂O₃-CeO₂ powder (having a specific surface area of 120 m/g), 250 g of water, 50 g of isopropylalcohol and 12 g of aluminum nitrate in a ball mill. The above-mentioned base was dipped in the slurry, picked up and dried. Then the slurry-coated base was heat-treated at 500°C for 5 minutes. As a result, the meshed core was fixed in the paper by aggregation of the catalyst carrier powder (BaO-Al₂O₃-CeO₂).

Next, the base was dipped in dinitrodiamineplatinum aqueous solution for 1 minute, picked up and dried. Then it was heat-treated at 500 °C for 5 minutes to decompose dinitrodiamineplatinum to platinum. As a result, there was produced a catalyst body wherein the meshed core of stainless steel had been fixed on the paper by catalyst carrier powder (BaO-Al₂O₃-CeO₂). On the catalyst body, 60 mg of BaO-Al₂O₃-CeO₂ and 1.8 mg of platinum were carried, respectively.

A steam generator shown in FIG.3 and FIG.4 was assembled for the catalyst body obtained as above-mentioned, in the same manner as that in Example 1.

Assessment of the obtained catalyst body in the above-mentioned manner was made with respect to the build up property and the life time in the same manner as that in Example 1.

### Example 3

The same stainless steel as that in Example 1 (30 mm width and 50 µm thickness) was treated into an expanded metal sheet which has substantially rhombic or hexagonal apertures with each side of about 1 mm length and has bone parts of about 0.2 mm width, and the expanded metal sheet was cut into 50 mm length pieces to obtain meshed cores. The meshed core and a paper (0.3 mm thickness, 30 mm width and 50 mm length) containing 98 wt% of alumina-silica fiber were piled and passed through a pair of pressing gears each with plastic sinusoidal shape teeth set to have 0.25 mm gap between their teeth so as to form wave-shape. Then, a wave-shaped base of 3 mm height of ridge and 5 mm pitch was obtained. The above-mentioned base was heat-treated at 900°C for 10 minutes to decompose organic component in the paper.

On the other hand, a catalyst slurry was obtained by mixing 100 g of BaO-Al₂O₃-CeO₂ powder (having a specific surface area of 120 m/g), 220 g of water, 50 g of isopropylalcohol and dinitrodiamineplatinum aqueous solution in an amount of 3 g converted to Pt in a ball mill. The above-mentioned base was dipped in the catalyst slurry, picked up and dried. Then the slurry-coated base was heat-treated at 500°C for 5 minutes. As a result, there was produced a catalyst body wherein the meshed core of stainless steel had fixed on the paper by catalyst carrier powder (BaO-Al₂O₃-CeO₂). This catalyst body carried 60 mg of BaO-Al₂O₃-CeO₂ and 1.8 mg of platinum, respectively.

A steam generator shown in FIG.3 and FIG.4 was assembled for the catalyst body obtained as above-mentioned, in the same manner as that in Example 1.

Assessment of the obtained catalyst body in the above-mentioned manner was made with respect to the build up property and the life time in the same manner as that in Example 1.

### Example 4

The same stainless steel as that in Example 1 (30 mm width and 50 µm thickness) was treated into an expanded metal sheet which has substantially rhombic or hexagonal apertures with each side of about 1 mm length and has bone parts of about 0.2 mm width, and the expanded metal sheet was cut into 50 mm length pieces to obtain meshed cores. The meshed core and a paper (0.3 mm thickness, 30 mm width and 50 mm length) containing 98 wt% of alumina-silica fiber were piled and passed through a pair of pressing gears each with plastic sinusoidal shape teeth set to have 0.25 mm gap between their teeth so as to form wave-shape, and a wave-shaped base of 3 mm height of ridge and 5 mm pitch was obtained. Then, the above-mentioned base was heat-treated at 900°C for 10 minutes to decompose organic component in the paper.

On the other hand, a catalyst carrier slurry was obtained by mixing 100 g of BaO-Al₂O₃-CeO₂ powder (having a specific surface area of 120 m/g), 270 g of water, 50 g of isopropylalcohol and 12 g of aluminum nitrate in a ball mill. The above-mentioned base was dipped in the catalyst carrier slurry, picked up and dried. Then the slurry-coated base was heat-treated at 500°C for 5 minutes. As a result, the meshed core was fixed in the paper by aggregation of the catalyst carrier powder (BaO-Al₂O₃-CeO₂).

Next, the base was dipped in dinitrodiamineplatinum aqueous solution for 1 minute, picked up and dried. Then it was heat-treated at 500°C for 5 minutes. As a result, there was produced a catalyst body wherein the meshed core of stainless steel had fixed on the paper by catalyst carrier powder (BaO-Al₂O₃-CeO₂). This catalyst body carried 60 mg of BaO-Al₂O₃-CeO₂ and 1.8 mg of platinum, respectively.

A steam generator shown in FIG.3 and FIG.4 was assembled for the catalyst body obtained as the above-mentioned, in the same manner as that in Example 1.

Assessment of the obtained catalyst body in the above-mentioned manner was made with respect to the build up property and the life time in the same manner as that in Example 1.

### Example 5

The same stainless steel as that in Example 1 (30 mm width and 50 µm thickness) was treated into an expanded metal sheet which has substantially rhombic or hexagonal apertures with each side of about 1 mm length and has bone parts of about 0.2 mm width, and the expanded metal sheet was cut into 50 mm length pieces to obtain meshed cores. A paper (0.3 mm thickness, 30 mm width and 50 mm length) containing 98 wt% of alumina-silica fiber was prepared. The paper and two meshed cores sandwiching the paper were passed through a pair of pressing gears each with plastic sinusoidal shape teeth set to have a 0.28 mm gap between their teeth so as to form wave-shape, and wave-shaped base of 3 mm height of ridge and 5 mm pitch was obtained. Then, the above-mentioned base was heat-treated at 900°C for 10 minutes to decompose organic component in the paper.

On the other hand, a catalyst slurry was obtained by mixing 100 g of BaO-Al₂O₃-CeO₂ powder (having a specific surface area of 120 m/g), 280 g of water, 50 g of isopropylalcohol and dinitrodiamineplatinum aqueous solution in an amount of 3 g converted to Pt in a ball mill.

The above-mentioned base was dipped in the catalyst slurry, picked up and dried. Then the slurry-coated base was heat-treated at 500°C for 5 minutes. As a result, there was produced a catalyst body wherein the meshed cores of stainless steel had been fixed on the paper by aggregation of the catalyst carrier powder (BaO-Al₂O₃-CeO₂). This catalyst body carried 60 mg of BaO-Al₂O₃-CeO₂ and 1.8 mg of platinum, respectively.

A steam generator shown in FIG.3 and FIG.4 was assembled for the catalyst body obtained as the above-mentioned, in the same manner as that in Example 1.

Assessment of the obtained catalyst body in the above-mentioned manner was made with respect to the build up property and the life time in the same manner as that in Example 1.

The catalyst bodies in Example 3 and Example 4 were obtained by dipping the base in the catalyst slurry or the catalyst carrier slurry after the heat-treatment of the paper. Then, the meshed core and the paper are easily to detach, therefore, the papers used in these Examples contain less organic component than those in Example 1 and Example 2. But a likeliness of pealing off was not observed in Example 5, because the paper had been fixed from the both sides by the meshed cores. Therefore, when the paper make combined with the meshed cores from the both sides, the influence of the organic component in the paper on the adhesion seems little. In this situation, the productivity of the catalyst body is not affected if the organic component in the paper had not be removed.

### Comparative example

The same stainless steel as that in Example 1 (30 mm width and 50 µm thickness) was cut into 50 mm length and passed through a pair of pressing gears to form wave-shape, and wave-shaped base of 3 mm height of ridge and 5 mm pitch was obtained. Then, the base was heat-treated at 900°C for 10 minutes.

On the other hand, a catalyst slurry was obtained by mixing 100 g of BaO-Al₂O₃-CeO₂ powder (having a specific surface area of 120 m/g), 200 g of water, 10 g of polyethyleneglycol, 1 g of surfactant and dinitrodiamineplatinum aqueous solution in an amount of 3 g converted to Pt in a ball mill.

Being held at the upper portion of the heat-treated base by the solenoid, the base was dipped in the catalyst slurry, picked up, dried and further heat-treated. In addition, the base was reversed upside down and treated in the same manner as the above-mentioned thereby to form a catalyst coating layer on the surface. The catalyst body thus obtained carried 60 mg of BaO-Al₂O₃-CeO₂ and 1.8 mg of platinum on the surface, respectively.

A steam generator shown in FIG. 3 and FIG. 4 was assembled for the catalyst body obtained as the above-mentioned, in the same manner as that in Example 1.

Assessment of the obtained catalyst body in the above-mentioned manner was made with respect to the build up property and the life time in the same manner as that in Example 1.

The build up time of the catalyst body of each Example and Comparative example are shown in table 1.

**Table 1**

| | time (sec) |
|---|---|
| Example 1 | approximately 80 |
| Example 2 | approximately 80 |
| Example 3 | approximately 80 |
| Example 4 | approximately 80 |
| Example 5 | approximately 100 |
| Comparative example | approximately 130 |

Though there were slight differences between the catalyst bodies of Examples 1, 2, 3 and 4, for all of these examples, the temperature of the steam generating chamber 20 can be made to reach to 200°C within approximately 80 seconds. The catalyst body of Example 5, in which the paper is fixed with the meshed cores from both sides, naturally has longer build up time than those of single side, due to a larger heat capacity. However, this catalyst body has far excellent build up property in comparison with the catalyst body of Comparative example including the metal base.

In the above-mentioned Examples, the width of the bone of the expanded metal sheet was 0.2 mm. But the build up property was able to be improved by making the width of the bone more smaller. However, selecting the width too small width causes cracks during the expand-treatment or forming in wave-shape. Therefore, the width of the bone is preferably larger than 0.1 mm.

The result of the life test in each Example showed absence of remarkable heat distortion, only suggesting possible occurrence of heat degradation at the upperstream portion. To be concrete, a part in approximately 7 - 8 mm in length was whitened at the upperstream portion. But, the change is not so great as to give any influence on the characteristic of catalyzed combustion (rate of combustion). In the catalyst body of the Comparative example, there remained an irreversible thermal distortion caused by the thermal hysteresis, and the metal base was thermally distorted at the upperstream portion in approximately 5 mm length. But it was not to such level that the influence of the distortion arise in the rate of combustion. The difference between the catalyst bodies of the present invention and that of the Comparative example is caused by the difference of the relaxation of the thermal stress in the catalyst body, because the catalyst bodies of the present invention use smaller amount of the metal than that in the Comparative example and can relax the thermal stress by the catalyst bodies themselves during the catalyzed combustion.

The corrosion resistance test was made by spraying an aqueous solution of sodium chloride to the catalyst body. To be concrete, spraying of the sodium chloride solution on the catalyst body for 1 hour and drying the catalyst body for 5 hours were repeated alternately. As a result, the catalyst bodies of Examples 3, 4 and 5 using the heat-treated cores are more excellent than the catalyst bodies of Examples 1 and 2. But the catalyst bodies of Examples 1 and 2 can be used efficiently if a very high corrosion resistance is not required.

A paper used in the present invention is mainly made of heat-resistant alumina-silica fiber and contains a slight amount of polyacrylamide to add flexibility. To be concrete, approximately 2 to 8 wt% of organic binder is contained. If the ratio of the organic binder is high, adhesion with the meshed core is excellent. But it becomes hard to impregnate the catalyst slurry or the catalyst carrier slurry into the paper, and hence the noble metal component was carried mainly on the surface of the paper. The situation of adhesion after heat-treatment becomes more poor as the ratio of the organic component increases. Therefore, it is preferable to select a paper containing preferable amount of organic component corresponding to the stainless steel. The paper is a thin sheet and it is preferably less than 2 mm in thickness, more preferably less than 1 mm in order to obtain such effect by forming a composite base with the meshed metal core.

The aluminum-containing ferrite stainless steel used in the meshed metal core of the present invention has excellent corrosion resistance or heat resistance. The meshed metal core, in general, is preferably consists of a composition containing chromium of 15 - 20 wt%, aluminum of 3 - 5 wt%, a slight amount of an additives and the rest of iron. The ferrite stainless steel is treated to meshed shape and attached to a paper mainly containing inorganic fiber. It is possible to use a previously heat-treated meshed metal core having an oxide layer on the surface. the meshed core used in the present invention has preferably a porosity of 60 %, more preferably 70 % or more, because the metal bones of the meshed core is required at that time to entangle in thickness direction of the base. Therefore, the width of the bone is preferably 0.3 mm or less, more preferably 0.2 mm or less. However, the width of the bone of the expanded metal sheet should preferably be 0.1 mm or more, because an expanded metal sheet having width of less than 0.1 mm is difficult to make.

On the other hand, if a wire-knitted mesh is used as the meshed core, the diameter of the filament can be less than 0.1 mm, and such mesh is excellent for integrating with the paper. Among the group of an expanded metal sheet, a punched plate and a mesh, the expanded metal sheet was best to integrate with the paper.

This would be because of a twisting of a part of the meshed metal core was made in the expansion step during making of the expanded metal sheet, thin and sharply cut bar or rod shaped member of the expanded metal sheet was obliquely arranged. And such oblique sharp bar was easily buried in the paper. Next best one was a knitted mesh. In case of the knitted mesh, most fine wire or filament can be used for a predetermined aperture ratio. Therefore, the knitted mesh was easily adhere to the paper being pressed thereto. A punched plate is expensive and besides inferior in the adhesiveness with the paper. For the case of the punched plate, an attention was necessary still after integrating with the paper.

Preferably, the paper mainly containing inorganic fiber and the meshed metal core(s) are formed in wave-shape by pressing together. This pressing is made by passing the paper and the meshed metal core(s) through the pressing gap of a pair of pressing gears. The gap of the pressing gears is set to the thickness of the paper or less so that the paper and the meshed metal core(s) are pressed together, and that the bar-shaped member or the metal bone of the meshed core and fibers of the paper are entangled each other during passing through the gears. The gap of the gears must be set in preferable range not so narrow as to break the paper. In the use of a punched plate as the meshed core to be combined with the paper, the pressing gap of the pressing gears must be set relatively narrow in comparison with the one using the expanded metal sheet, in order to achieve a sufficiently strong adhesive force.

The catalyst slurry or the catalyst carrier slurry of the Examples in the present invention mainly contains active alumina. It is preferable to add an oxide of an alkaline-earth metal, preferably barium oxide, to the catalyst carrier for improving the heat resistance of the active alumina, or an oxide of a rare-earth metal, preferably cerium oxide, as a subsidiary catalyst. It is also preferable to add zeolite of some amount to the catalyst slurry or the catalyst carrier slurry as a deodorant. It is possible to add a slight amount of binder, i.e., alumina sol to the catalyst slurry or the catalyst carrier slurry to improve the binding force between the active alumina and the inorganic fiber.

The noble metal to be carried can be the one that has previously been carried on the catalyst carrier powder.

It is possible to use an alcohol (e.g., methylalcohol, ethylalcohol, isopropylalcohol etc.) or a mixture of an alcohol and water instead of water as the disperse medium of the catalyst slurry.

Similarly, it is possible to use an alcohol (e.g., methylalcohol, ethylalcohol, isopropylalcohol etc.) or a mixture of an alcohol and water instead of water as the disperse medium of the catalyst carrier slurry. And an organic solvent also may be used as the disperse medium.

Although Pt was used as the noble metal component for catalyzed-combustion of isobutane in the above-mentioned Examples, for the usage other than the above-mentioned purpose, namely for catalyzed-combustion of kerosene and for purifying the exhaust gas, Pd, Rh and Ru may be used alternatively.

Apart from the above-mentioned Examples wherein catalyst bodies are formed into wave-shape, such other mode may be used. For example, a flat shaped catalyst body is produced by using a pair of pressing rolls without wave-shaped teeth. It is apparent that the flat plate shaped catalyst body is also excellent in some use.

Although the present invention has been described in terms of the presently preferred Examples, it is to be understood that such disclosure is not to be interpreted as limiting. Various alternations and modifications will no doubt become apparent to those skilled in the art to which the present invention pertains, after having read the above disclosure. Accordingly, it is intended that the appended claims be interpreted as covering all alternations and modifications as fall within the true spirit and scope of the invention.

## Claims

1. A catalyst body comprising:
a meshed core of aluminum-containing ferrite stainless steel,
a paper substantially consisting of inorganic fiber adhered to said meshed core, and a catalytic component comprising mainly a noble metal and inorganic powder;
wherein said catalytic component combines and fixes said paper and said meshed core with each other.

2. The catalyst body in accordance with claim 1, wherein said catalyst body has a wave-shape section.

3. The catalyst body in accordance with claim 1 or 2, wherein said inorganic powder consists of at least one compound selected from alumina, zirconia, zeolite, silica and titania.

4. A method for manufacturing a catalyst body, comprising the steps of:
pressing at least one paper substantially consisting of inorganic fiber, and at least one meshed core of aluminum-containing ferrite stainless steel piled together,to form an integral sheet-shaped pile,
cutting said pile to a predetermined size to obtain a base,
dipping said base in a slurry which contains a catalyst carrier of inorganic powder dispersed therein and a noble metal salt dissolved therein, for sticking said slurry onto said base,
drying said base, and
heat-treating said base for mutually fixing said meshed core and said paper and decomposing said noble metal salt to noble metal.

5. A method for manufacturing a catalyst body, comprising the steps of:
pressing at least one paper substantially consisting of inorganic fiber, and at least one meshed core of aluminum-containing ferrite stainless steel piled together,to form an integral sheet-shaped pile,
cutting said pile to a predetermined size to obtain a base,
dipping said base in a slurry which contains a catalyst carrier of inorganic powder dispersed therein, for sticking said slurry onto said base,
drying said base,
heat-treating said base for mutually fixing said meshed core and said paper,
drying said base,
dipping said base in an aqueous solution of a noble metal salt,
drying said base, and
heat-treating said base for decomposing said noble metal salt to noble metal.

6. A method for manufacturing a catalyst body, comprising the steps of:
pressing at least one paper substantially consisting of inorganic fiber, and at least one meshed core of aluminum-containing ferrite stainless steel piled together, to form an integral sheet-shaped pile,
cutting said pile to a predetermined size to obtain a base,
decomposing organic component included in said paper by heat-treatment,
dipping said base in a slurry which contains a catalyst carrier of inorganic powder dispersed therein and a noble metal salt dissolved therein, for sticking said slurry onto said base,
drying said base, and
heat-treating said base for mutually fixing said meshed core and said paper and decomposing said noble metal salt to noble metal.

7. A method for manufacturing a catalyst body, comprising the steps of:
pressing at least one paper substantially consisting of inorganic fiber, and at least one meshed core of aluminum-containing ferrite stainless steel piled together,to form an integral sheet-shaped pile,
cutting said pile to a predetermined size to obtain a base,
decomposing organic component included in said paper by heat-treatment,
dipping said base in a slurry which contains a catalyst carrier of inorganic powder dispersed therein, for sticking said slurry onto said base,
drying said base,
heat-treating said base for mutually fixing said meshed core and said paper,
dipping said base in an aqueous solution of a noble metal salt,
drying said base, and
heat-treating said base for decomposing said noble metal salt to noble metal.

8. A method for manufacturing a catalyst body in accordance with any one of claims 4 to 7, further comprising the step of:
press-forming said sheet-shaped pile so as to have a wave-shape section.

9. A method for manufacturing a catalyst body in accordance with any one of claims 4 to 8, wherein:
said inorganic powder consists of at least one compound selected from alumina, zirconia, zeolite, silica and titania.
